# EUROPÄISCHE PATENTSCHRIFT

(11) **EP 2 125 150 B1**
(45) Veröffentlichungstag und Bekanntmachung des Hinweises auf die Patenterteilung: **10.04.2013**
(21) Anmeldenummer: 08715478.7
(22) Anmeldetag: 08.02.2008
(51) Int. Cl.: B01D 45/08

(54) **TROPFENABSCHEIDERANORDNUNG FÜR GASWÄSCHER**
MIST ELIMINATOR SYSTEM FOR A GAS SCRUBBER
DISPOSITIF DE DÉPÔT DE GOUTTES POUR DISPOSITIF DE LAVAGE DE GAZ

(30) Priorität: 10.02.2007 DE 202007001942 U
(43) Veröffentlichungstag der Anmeldung: 02.12.2009
(73) Patentinhaber: Munters Euroform GmbH, 52068 Aachen (DE)
(72) Erfinder: KANKA, Helmut, 47178 Duisburg (DE); JANSEN, Matthias, 52223 Stolberg (DE); KRAUSS, Roland, 41836 Hückelhoven (DE); KAISER, Roman, 52249 Eschweiler (DE)
(74) Vertreter: Hauck Patent- und Rechtsanwälte
(86) Internationale Anmeldenummer: PCT/DE2008/000245
(87) Internationale Veröffentlichungsnummer: WO 2008/095487

(56) Entgegenhaltungen:
- EP-A- 0 747 107
- WO-A-2005/107921
- DE-U1-202005 002 674
- US-A- 3 870 487

## Beschreibung

Die vorliegende Erfindung betrifft eine Tropfenabscheideranordnung für Gaswäscher u.dgl. mit den Merkmalen des Oberbegriffs von Patentanspruch 1.

Es sind Tropfenabscheideranordnungen aus der EP 0 747 107 B1 bekannt. Da hierbei die Tropfenabscheiderlagen einen relativ großen Abstand voneinander haben, sind diese auf/an zwei verschiedenen Trägerkonstruktionen des Gaswäschers gelagert, die übereinander im Abstand voneinander angeordnet sind. Der entsprechende Aufwand zur Lagerung der Tropfenabscheiderlagen ist daher relativ hoch.

Ferner ist es aus der EP 0 747 107 B1 bereits bekannt, bei zwei Tropfenabscheiderlagen, die zusammen in der Form einer Raute ausgebildet und bei denen die Ränder der beiden Lagen benachbart zueinander angeordnet sind, eine Lagerung beider Tropfenabscheiderlagen an einer einzigen Trägerkonstruktion zu verwirklichen, indem die Seitenwände der Tropfenabscheiderlagen jeweils nach außen abgewinkelte Flansche besitzen und mit diesen Flanschen auf der Trägerkonstruktion aufliegen.

Aus der WO 2005/107921 A1 ist eine Tropfenabscheideranordnung mit den Merkmalen des Oberbegriffs von Patentanspruch 1 bekannt, die eine gemeinsame Stützkonstruktion aufweist, an der die Seitenwände der Tropfenabscheiderlagen fest oder lösbar angeordnet sind. Hierbei ist jedoch die gemeinsame Stützkonstruktion nur kurz ausgebildet, da die seitlichen Schenkel der Tropfenabscheiderlagen bei allen Ausführungsbeispielen immer zueinander weisen. Ein vorgesehener unterer Querstab ist nicht direkt mit der Stützkonstruktion verbunden, sondern über vertikale Pfosten an dieser angebracht.

Aus der DE 20 2005 002 674 U1 ist es bekannt, diverse Abscheiderlagen an einem zweiteilig ausgeführten Gehäuse mit einem Gehäuseoberteil und einem Gehäuseunterteil anzubringen. Bei dieser Tropfenabscheideranordnung ist daher keine gemeinsame Stützkonstruktion vorhanden.

Die US-PS 3 870 487 beschreibt ein Lagersystem für eine Vielzahl von vertikal angeordneten Modulen. Es geht hierbei nicht um eine Tropfenabscheideranordnung für Gaswäscher mit einer Spüleinrichtung zum Spülen der An- und/oder Abströmseite von mindestens einer Tropfenabscheiderlage.

Der vorliegenden Erfindung liegt die Aufgabe zugrunde, eine Tropfenabscheideranordnung der angegebenen Art zu schaffen, die eine besonders einfach und kompakt ausgebildete Lagerkonstruktion besitzt.

Diese Aufgabe wird erfindungsgemäß bei einer Tropfenabscheideranordnung der angegebenen Art durch die kennzeichnenden Merkmale von Patentanspruch gelöst.

Bei der erfindungsgemäß ausgebildeten Tropfenabscheideranordnung besitzen die Seitenränder der beiden Tropfenabscheiderlagen einen großen Abstand voneinander, da die Seitenabschnitte der Tropfenabscheiderlagen parallel zueinander angeordnet sind. Erfindungsgemäß werden nunmehr auch in diesem Fall, in dem die Tropfenabscheiderlagen einen relativ großen Abstand voneinander besitzen, beide Lagen gemeinsam auf/an einer gemeinsamen Konstruktion gelagert.

Dies wird dadurch realisiert, dass für beide Tropfenabscheiderlagen eine gemeinsame Stützkonstruktion vorgesehen ist, an der die Seitenwände der Tropfenabscheiderlagen fest oder lösbar angeordnet sind. Die gemeinsame Stützkonstruktion dient dann zur Lagerung auf/an der einzigen Trägerkonstruktion mit Hilfe von einem abgewinkelten Flansch, der auf einem Träger aufliegt. Auf diese Weise gelingt es, zwei Tropfenabscheideranordnungen mit einem relativ geringen Aufwand im Strömungskanal eines Gaswäschers zu lagern.

Es sind zwei parallel zueinander angeordnete Tropfenabscheiderlagen in der Form eines umgedrehten V vorgesehen.

Die erfindungsgemäße Ausführungsform zeichnet sich durch das Merkmal aus, dass die Seitenränder der beiden Tropfenabscheiderlagen einen relativ großen Abstand voneinander aufweisen, der erfindungsgemäß durch die Anordnung einer gemeinsamen Stützkonstruktion überbrückt wird.

Die Tropfenabscheideranordnung weist eine Spüleinrichtung zum Spülen der Anströmseite der unteren Tropfenabscheiderlage auf. Diese Spüleinrichtung ist an den gemeinsamen Stützkonstruktionen angebracht. Hierbei können separate Pfosten zum Tragen der Spüleinrichtung entfallen, da die Querstange, an der die Sprühdüsen befestigt sind, direkt an den gemeinsamen Stützkonstruktionen befestigt ist.

Zur Lagerung an/auf der einzigen Trägerkonstruktion besitzt die gemeinsame Stützkonstruktion einen nach außen abgewinkelten Flansch, der auf einem Träger der Trägerkonstruktion aufliegt.

Die Tropfenabscheideranordnung weist ferner eine sich durch die gemeinsame Seitenwand oder gemeinsame Stützkonstruktion erstreckende Verbindungsstange auf, die sich somit zwischen den beiden gegenüberliegenden Stützkonstruktionen erstreckt und diese miteinander verbindet. Hierdurch wird eine Stabilisierung der Gesamtkonstruktion erreicht. Die Verbindungsstange erstreckt sich durch die gemeinsamen Stützkonstruktionen hindurch und liegt auf dem abgewinkelten Flansch der gemeinsamen Stützkonstruktionen auf.

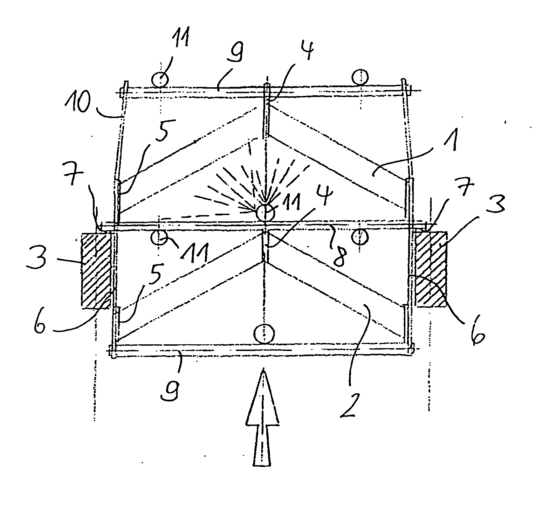

Die Erfindung wird nachfolgend anhand eines Ausführungsbeispiels in Verbindung mit der Zeichnung im Einzelnen beschrieben. Die einzige Figur zeigt einen schematischen Vertikalschnitt durch den Strömungskanal eines Gaswäschers, in dem eine Ausführungsform einer Tropfenabscheideranordnung angeordnet ist.

In dem in der Figur schematisch angedeuteten Strömungskanal eines Gaswäschers erfolgt die Gasströmung von unten nach oben, wie durch den Pfeil angedeutet. Im Gasströmungskanal befindet sich eine Trägerkonstruktion, von der zwei Träger 3 im Schnitt dargestellt sind. Auf dieser Trägerkonstruktion ist eine Tropfenabscheideranordnung gelagert, die zwei in der Form eines umgedrehten V ausgebildete Tropfenabscheiderlagen 1, 2 umfasst. Jede Tropfenabscheiderlage 1, 2 besteht aus einer Reihe von parallel zueinander angeordneten Tropfenabscheiderprofilen (Lamellenprofilen), die über gemeinsame Seitenwände 5 und Mittelwände 4 zu Paketen zusammengefasst sind.

Zur Lagerung der beiden Tropfenabscheiderlagen 1, 2 am linken und rechten Träger 3 ist links und rechts eine Stützkonstruktion 6 vorgesehen, bei der es sich um ein plattenförmiges Element handelt, das einen nach außen abgewinkelten Flansch 7 aufweist, der auf dem Träger 3 aufliegt. An der Innenseite der plattenförmigen Stützkonstruktion 6 sind die Seitenwände 5 der beiden Tropfenabscheiderlagen 1, 2 befestigt, beispielsweise durch Verschraubung oder auf lösbare Weise, indem sie beispielsweise in U-förmigen Halterungen verschiebbar gelagert sind. Die plattenförmigen Stützkonstruktionen 6 erstrecken sich nach unten mindestens bis zum unteren Rand der Seitenwand 5 der unteren Tropfenabscheiderlage 2 und nach oben mindestens bis zum oberen Rand der Seitenwand 5 der oberen Tropfenabscheiderlage 1.

Ferner weist die Tropfenabscheideranordnung eine Verbindungsstange 8 auf, die sich durch entsprechende Öffnungen in den beiden Stützkonstruktionen 6 erstreckt und auf den abgewinkelten Flanschen 7 der Stützkonstruktionen 6 aufliegt. Die Verbindungsstange 8 dient zur Stabilisierung der Tropfenabscheideranordnung und ist in geeigneter Weise an den beiden Stützkonstruktionen 6 befestigt.

Darüber hinaus weist die Tropfenabscheideranordnung eine Spüleinrichtung zum Spülen der An- und Abströmseite der beiden Tropfenabscheiderlagen 1, 2 auf. Zum Spülen der Anströmseite der unteren Tropfenabscheiderlage 2 ist eine Querstange 9 vorgesehen, an der eine mittlere Sprühdüse befestigt ist. Diese Querstange 9 ist an den unteren Enden der beiden Stützkonstruktionen 6 fixiert. Die Abströmseite der unteren Tropfenabscheiderlage 2 und die Anströmseite der oberen Tropfenabscheiderlage 1 werden über Düsen 11 (Bedüsungsrohre) besprüht, die an der Verbindungsstange 8 befestigt sind. Schließlich wird die Abströmseite der oberen Tropfenabscheiderlage 1 mit Düsen 11 besprüht, die ebenfalls an einer Querstange 9 angeordnet sind, welche über Pfosten 10 gelagert ist, die an den Stützkonstruktionen 6 angebracht sind.

Das Gesamtsystem ist daher an zwei Trägern 3 einer einzigen Trägerkonstruktion gelagert.

## Patentansprüche

1. Tropfenabscheideranordnung für Gaswäscher u. dgl. mit einer in Gasströmungsrichtung unteren und oberen Tropfenabscheiderlage (2, 1), die sich jeweils aus einer Reihe von parallel zueinander angeordneten Tropfenabscheiderprofilen zusammensetzen und die beide über gemeinsame plattenförmige Stützkonstruktionen (6), an denen die Seitenwände (5) der Tropfenabscheiderlagen (2, 1) fest oder lösbar angeordnet sind, auf/an einer einzigen gemeinsamen Trägerkonstruktion (Träger 3) gelagert sind, wobei die Stützkonstruktionen (6) sich nach unten mindestens bis zum unteren Rand der Seitenwand (5) der unteren Tropfenabscheiderlage (2) erstrecken und jeweils einen abgewinkelten Flansch (7) zur Lagerung auf der einzigen Trägerkonstruktion (Träger 3) besitzen und eine die Stützkonstruktionen (6) verbindende und sich durch diese erstreckende Verbindungsstange (8) auf den abgewinkelten Flanschen (7) aufliegt, und mit einer Spüleinrichtung zum Spülen der Anströmseite der unteren Tropfenabscheiderlage (2), die an einer von den gemeinsamen plattenförmigen Stützkonstruktionen (6) getragenen Querstange (9) angebracht ist, **dadurch gekennzeichnet, dass** sich die seitlichen Abschnitte der unteren Tropfenabscheiderlage (2, 1) in der Form eines umgedrehten V parallel zu den entsprechenden seitlichen Abschnitten der oberen Tropfenabscheiderlage (1, 2) erstrecken und dass die Querstange (9) direkt an den beiden unteren Enden der plattenförmigen Stützkonstruktionen (6) befestigt ist.

2. Tropfenabscheideranordnung nach Anspruch 1, **dadurch gekennzeichnet, dass** sie Düsen (11) zum Besprühen der Abströmseite der oberen Tropfenabscheiderlage (1) aufweist, die an einer Querstange (9) angeordnet sind, welche über Pfosten (10) gelagert ist, die an den Stützkonstruktionen (6) angebracht sind.

3. Tropfenabscheideranordnung nach Anspruch 1 oder 2, **dadurch gekennzeichnet, dass** sie Düsen (11) zum Besprühen der Abströmseite der unteren Tropfenabscheiderlage (2) und der Anströmseite der oberen Tropfenabscheiderlage (1) aufweist, die an der Verbindungsstange (8) befestigt sind.

## Claims

1. A droplet separator system for gas scrubbers etc. comprising, in gas flow direction, a lower and upper droplet separator layer (2, 1) each consisting of a row of parallel droplet separator profiles and both being supported on/at a single common carrier construction (carrier 3) by means of a common plate-like support construction (6) at which the sidewalls (5) of the droplet separator layers (2, 1) are disposed in a fixed or removable manner, wherein the support constructions (6) extend downwardly at least to the lower edge of the sidewall (5) of the lower droplet separator layer (2) and have an angled flange (7) for the support on the single carrier construction (carrier 3), respectively, and a connecting rod (8) connecting the support constructions (6) and extending through the same lies upon the angled flanges (7), and rinsing means for rinsing the front side of the lower droplet separating layer (2) which is mounted at a cross rod (9) carried by the common plate-like support constructions (6), **characterized in that** the lateral portions of the lower droplet separator layer (2, 1) extend in the shape of a reversed V parallel with respect to the corresponding lateral portions of the upper droplet separator layer (1, 2) and that the cross rod (9) is directly fixed at the two lower ends of the plate-like support constructions (6).

2. The droplet separator system according to claim 1, **characterized in that** it includes nozzles (11) for spraying the back side of the upper droplet separator system (1) which are disposed at a cross rod (9) supported by means of posts (10) arranged at the support constructions (6).

3. The droplet separator system according to claim 1 or 2, **characterized in that** it includes nozzles (11) for spraying the back side of the lower droplet separator layer (2) and the front side of the upper droplet separator layer (1) which are fixed at the connecting rod (8).

## Revendications

1. Dispositif séparateur de gouttes pour épurateurs de gaz ou autres installations analogues, comportant
- deux couches de séparateur de gouttes (2, 1) inférieure et supérieure dans le sens d'écoulement du gaz, qui se composent chacune d'une rangée de profilés de séparateur de gouttes agencés parallèlement les uns aux autres et qui sont logées toutes deux sur une unique structure porteuse commune (support 3) à l'aide de structures de soutien communes (6) en forme de plaques sur lesquelles les parois latérales (5) des couches de séparateur de gouttes (2, 1) sont agencées de manière fixe ou amovible, les structures de soutien (6) s'étendant vers le bas au moins jusqu'au bord inférieur de la paroi latérale (5) de la couche de séparateur de gouttes inférieure (2) et comprenant à chaque fois un collet coudé (7) en vue du logement sur l'unique structure porteuse (support 3) et une barre de liaison (8) qui relie les structures de soutien (6) et qui s'étend à travers celles-ci reposant sur les collets coudés (7),
- et un dispositif de rinçage qui est destiné à rincer le côté d'écoulement amont de la couche de séparateur de gouttes inférieure (2) et qui est placé sur une barre transversale (9) portée par les structures de soutien communes en forme de plaques (6),
**caractérisé en ce que** les parties latérales de la couche de séparateur de gouttes inférieure (2, 1) s'étendent, en forme de V retourné, parallèlement aux parties latérales correspondantes de la couche de séparateur de gouttes supérieure (1, 2) et **en ce que** la barre transversale (9) est fixée directement aux deux extrémités inférieures des structures de soutien en forme de plaques (6).

2. Dispositif séparateur de gouttes selon la revendication 1, **caractérisé en ce qu'**il comporte des buses (11) qui sont destinées à asperger le côté d'écoulement aval de la couche de séparateur de gouttes supérieure (1) et qui sont agencées sur une barre transversale (9), elle-même logée sur des montants (10) qui sont placés sur les structures de soutien (6).

3. Dispositif séparateur de gouttes selon la revendication 1 ou 2, **caractérisé en ce qu'**il comporte des buses (11) qui sont destinées à asperger le côté d'écoulement aval de la couche de séparateur de gouttes inférieure (2) et le côté d'écoulement amont de la couche de séparateur de gouttes supérieure (1) et qui sont fixées à la barre de liaison (8).
